# EUROPEAN PATENT APPLICATION

(11) **EP 3 043 268 A1**
(43) Date of publication of application: **13.07.2016**
(21) Application number: 14760227.0
(22) Date of filing: 26.02.2014
(51) Int. Cl.: G06F 13/16

(54) **PATH DYNAMIC LINKING METHOD, DEVICE AND MOBILE TERMINAL**

(30) Priority: 06.09.2013 CN 201310405640
(71) Applicant: ZTE Corporation, Shenzhen, Guangdong 518057 (CN)
(72) Inventor: LIU, Xiaorui, Shenzhen Guangdong 518057 (CN); LIU, Zhen, Shenzhen Guangdong 518057 (CN); SUN, Lele, Shenzhen Guangdong 518057 (CN); ZHANG, Li, Shenzhen Guangdong 518057 (CN)
(74) Representative: Novagraaf Technologies
(86) International application number: PCT/CN2014/072569
(87) International publication number: WO 2014/135021

(57) **Abstract**

The present disclosure provides a dynamic path linking method and device, and a mobile terminal. The method includes that: responding to a request for invoking the path of the primary memory, it is detected whether an external storage card exists; and the path of the primary memory is dynamically set to be a storage path of the external storage card or a storage path of an internal storage card according to a detection result. The present disclosure solves the problem that the path of the primary memory cannot be dynamically linked, thereby achieving an effect of improving user experience.

## Description

### Technical Field

The present disclosure relates to the field of communications, and in particular to a dynamic path linking method and device, and a mobile terminal.

### Background

In the relevant art, there are mainly two mainstream solutions about T-card smart phones. One of the solutions is an Iphone Operation System (IOS) solution, represented by IPHONE, mobile phones based on this system are high-end mobile phones in the industry, due to no cost pressure, internal storage spaces of the mobile phones are 16G at least, and therefore this type of terminal does not have a function of supporting an external T card. The other one of the solutions is a Google-based Android operation system solution, due to the openness of an Android system, most of current smart phones manufactured by terminal manufacturers are developed based on the Android system, and most of mobile phones support a mobile phone double-T card function.

The mobile phone double-T card function refers to that a storage space of a mobile phone is divided into an internal storage card and an external storage card. The external storage card is a T card externally connected by a user, and the internal storage card is a virtual T card mounted by a separate area formed from an internal Flash area of the mobile phone to be used by the user. Currently, there are two mainstream double-T card solutions in the industry, which may be distinguished into an internal virtual T card priority mode and an external T card priority mode in accordance with the priorities of the internal and external T cards. A great number of manufacturers adopt the two double-T card solutions, which both have specific advantages and disadvantages as follows.

The internal virtual card priority solution is mainly applied to high-end phones. The using precondition of the solution is that the storage space of the mobile phone is large enough, and a large enough virtual T card space may be formed. In the T card solution, the internal virtual T card serves as a primary storage space. The solution has the advantages that due to no existence of a removed scenario in the internal storage space of the mobile phone, the compatibility of third-party applications is high, and flow processing is simple. The solution has the disadvantages that applications installed in the mobile phone may not be moved to the external T card, files and data cannot be downloaded to the external T card during downloading, the internal storage space of the mobile phone is overly consumed when an application with a large database such as navigation software and a large-scale game is installed, large-scale application software may not be installed when the internal storage space of the mobile phone is not enough, and the hardware cost is very high. Currently, part of high-end mobile phones namely Samsung and HTC mainly adopt the solution, the solution of IPHONE may be classified as a special embodiment of the solution, and only falls within a state in which the external T card is not inserted in the solution.

The external T card priority solution is mainly applied to middle- and low-end phones. The solution does not have too high requirements on the own storage space of the mobile phone. In the solution, the external T card serves as a primary storage space, the extendibility is high, third-party application software installed in the mobile phone can be directly installed on the external T card or moved to the external T card, and the primary storage space of the mobile phone may be upgraded by increasing the capacity of the external T card. The solution has the disadvantages that since the primary storage space of the mobile phone may be removed anytime, flow processing is complicated. The biggest disadvantage is that when a primary memory namely the external T card is pulled out, part of third-party application software will detect whether the primary memory exists, and if NO, multiple pieces of third-party application software will not be used. Main manufacturers which currently adopt the solution are ZTE, Huawei, Lenovo, Coolpad and part of phone types of HTC.

An effective solution is not proposed currently for the problem in the relevant art that the path of the primary memory cannot be dynamically linked.

### Summary

The embodiments of the present disclosure provide a dynamic path linking method and device, and a mobile terminal, which are intended to at least solve the above-mentioned problem.

According to one aspect of the embodiments of the prevent disclosure, a dynamic path linking method is provided, which may include that: responding to a request for invoking the path of the primary memory, it is detected whether an external storage card exists; and a path of the primary memory is dynamically set to be a storage path of the external storage card or a storage path of an internal storage card according to a detection result.

Preferably, before the request for invoking the path of the primary memory is responded, the method may further include that: the external storage card is mounted as a primary memory, and the internal storage card is mounted as a secondary memory.

Preferably, the step that the path of the primary memory is dynamically set to be the storage path of the external storage card or the storage path of the internal storage card according to the detection result may include at least one of the following steps that: under the condition that it is detected that the external storage card exists, the path of the primary memory is set dynamically to be the storage path of the internal storage card; and under the condition that it is detected that the external storage card does not exist, the path of the primary memory is dynamically set to be the storage path of the external storage card.

Preferably, after the storage path of the internal storage card is dynamically linked to the path of the primary memory, the method may further include that: when it is detected that the external storage card is inserted, user data stored in the internal storage card are synchronized to the external storage card.

Preferably, responding to the request for invoking the path of the primary memory may include that the request for invoking the path of the primary memory from a third-party application is responded.

According to another aspect of the embodiments of the present disclosure, a dynamic path linking device is provided, which may include: a detection component configured to respond to a request for invoking a path of a primary memory, and detect whether an external storage card exists; and a linking component configured to dynamically set the path of the primary memory to be a storage path of the external storage card or a storage path of an internal storage card according to a detection result.

Preferably, before the request for invoking the path of the primary memory is responded, the method may further include that: the external storage card is mounted as a primary memory, and the internal storage card is mounted as a secondary memory.

Preferably, the linking component may be further configured to execute at least one of the following steps: dynamically setting the path of the primary memory to be the storage path of the internal storage card under the condition that it is detected that the external storage card does not exist; and dynamically setting the path of the primary memory to be the storage path of the external storage card under the condition that it is detected that the external storage card exists.

Preferably, the device may further include a synchronization component configured to synchronize user data stored in the internal storage card to the external storage card when it is detected that the external storage card is inserted.

Preferably, the detection component may be further configured to respond to the request for invoking the path of the primary memory from a third-party application.

According to another aspect of the embodiments of the present disclosure, a mobile terminal is provided, which may include the dynamic path linking device.

By means of the embodiments of the present disclosure, responding to the request for invoking the path of the primary memory, it is detected whether the external storage card exists; and the path of the primary memory is dynamically set to be the storage path of the external storage card or the storage path of the internal storage card according to the detection result, thereby solving the problem that the path of the primary memory cannot be dynamically linked, and further achieving an effect of improving user experience.

### Brief Description of the Drawings

The drawings described here are intended to provide further understanding of the present disclosure, and form a part of the present disclosure. The schematic embodiments and descriptions of the present disclosure are intended to explain the present disclosure, and do not form improper limits to the present disclosure. In the drawings:
Fig. 1 is a flowchart of a dynamic path linking method according to an embodiment of the present disclosure;
Fig. 2 is a structural diagram 1 of dynamic path linking device according to an embodiment of the present disclosure;
Fig. 3 is a structural diagram 2 of dynamic path linking device according to an embodiment of the present disclosure;
Fig. 4 is a structural diagram 3 of dynamic path linking device according to an embodiment of the present disclosure;
Fig. 5 is a flowchart of a dynamic path linking method in case of insertion of an external T card according to a preferred embodiment of the present disclosure;
Fig. 6 is a flowchart of a dynamic path linking method in case of no insertion of an external T card according to a preferred embodiment of the present disclosure; and
Fig. 7 is a flowchart of a dynamic path linking method in case of re-insertion of an external T card according to a preferred embodiment of the present disclosure.

### Detailed Description of the Embodiments

The present disclosure is described below with reference to the drawings and the embodiments in detail. It is important to note that the embodiments of the present disclosure and the characteristics in the embodiments can be combined under the condition of no conflicts.

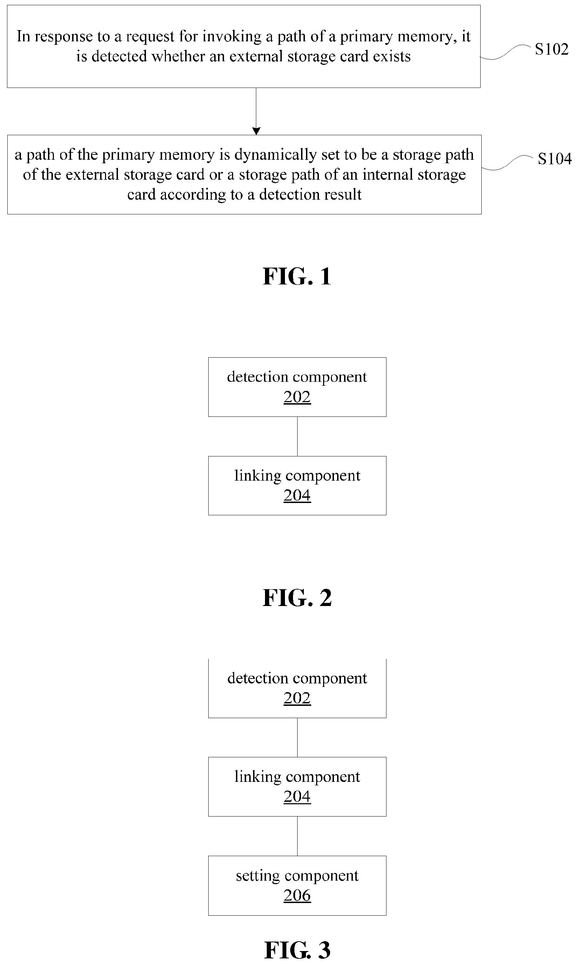

An embodiment of the present disclosure provides a dynamic path linking method. Fig. 1 is a flowchart of a dynamic path linking method according to an embodiment of the present disclosure. As shown in Fig. 1, the method includes the steps as follows.

Step S102: responding to a request for invoking a path of a primary memory, it is detected whether an external storage card exists.

Step S104: a path of the primary memory is dynamically set to be a storage path of the external storage card or a storage path of an internal storage card according to a detection result.

By means of the steps, the problem that the path of the primary memory cannot be dynamically linked is solved, and the effect of improving the user experience is further achieved.

In another preferred embodiment, before the request for invoking the path of the primary memory is responded, the method may further include that: the external storage card is taken as a primary memory, and the internal storage card is taken as a secondary memory. By means of the step, when the external storage card is removed, the primary memory is physically removed, the main memory is no longer mounted to the device, but the internal storage card is still taken as the secondary memory. Thus, the difference is avoided logically, the compatibility with a bottom layer processing mechanism of a current mainstream platform provider is ensured.

In another preferred embodiment, the step that the path of the primary memory is dynamically set to be the storage path of the external storage card or the storage path of the internal storage card according to the detection result may further include at least one of the followings: under the condition that it is detected that the external storage card does not exist, the path of the primary memory is set dynamically to be the storage path of the internal storage card; and under the condition that it is detected that the external storage card exists, the path of the primary memory is set dynamically to be the storage path of the external storage card. By means of the steps, physical storage paths and logic mounting paths of the internal storage card and the external storage card are separated, and no matter whether the external storage card is removed, consistent operation flow service is provided for an upper layer business. The logic mounting paths at a bottom layer remain unchanged, so that the complexity and difference of an operation process may be avoided, and access requirements of an upper layer application on the internal storage card and the external storage card under different scenarios are met by dynamic path linking.

In another preferred embodiment, after the path of the primary memory is set dynamically to be the storage path of the internal storage card, the method may further include that: when it is detected that the external storage card is inserted, user data stored in the internal storage card are synchronized to the external storage card. By means of the step, under the condition that the external storage card is re-inserted, the user data stored in the internal storage card previously may be synchronized to the external storage card, thereby maintaining the consistency of the user data and reducing the load of the internal storage card.

In another preferred embodiment, the step that the request for invoking the path of the primary memory is responded includes that the request for invoking the path of the primary memory from a third-party application is responded. The request for invoking the path of the primary memory may be made by the third-party application or may be made by an Android system itself. By means of the response to the request for invoking the path of the primary memory of the third-party application, the problem that the third-party application cannot find the path of the primary memory can be solved, and the compatibility of the third-party application is improved.

An embodiment of the present disclosure further provides a dynamic path linking device. Fig. 2 is a structural diagram 1 of a dynamic path linking device according to an embodiment of the present disclosure. As shown in Fig. 2, the device includes:
a detection component 202 configured to respond to a request for invoking a path of a primary memory, and detect whether an external storage card exists; and
a linking component 204 configured to dynamically set a the path of the primary memory to be a storage path of the external storage card or a storage path of an internal storage card according to a detection result.

In another preferred embodiment, as shown in Fig. 3, the device may further include a setting component 206 configured to take the external storage card as a primary memory and take the internal storage card as a secondary memory.

In another preferred embodiment, the linking component 204 may be further configured to execute at least one of the followings: dynamically setting the path of the primary memory to be the storage path of the internal storage card under the condition that it is detected that the external storage card exists; and dynamically setting the path of the primary memory to be the storage path of the external storage card under the condition that it is detected the external storage card does not exist..

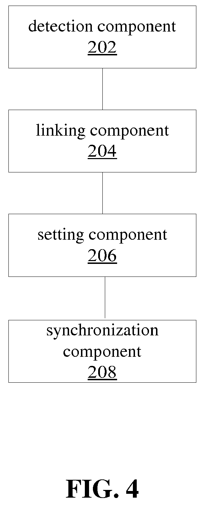

In another preferred embodiment, as shown in Fig. 4, the device may further include a synchronization component 208 configured to synchronize user data stored in the internal storage card to the external storage card when it is detected that the external storage card is inserted.

In another preferred embodiment, the detection component 20 may be further configured to respond to the request for invoking the path of the primary memory from a third-party application.

In the following embodiments, an external T card is equivalent to the external storage card, an internal virtual T card is equivalent to the internal storage card, invoking of a standard interface ISExternStorageExist of the Android system by the third-party application is equivalent to invoking of the request for invoking the path of the primary memory by the third-party application.

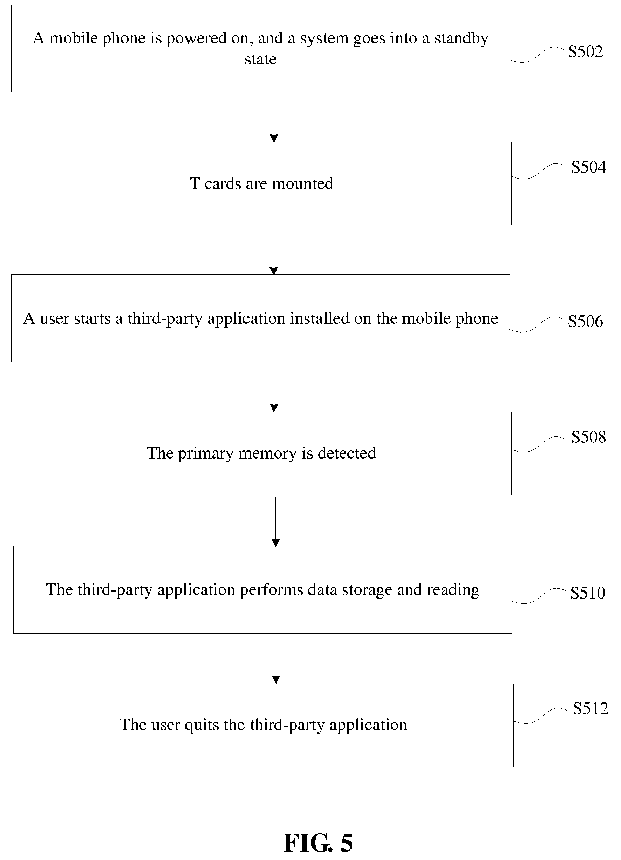

Fig. 5 is a flowchart of a dynamic path linking method in case of insertion of an external T card according to a preferred embodiment of the present disclosure. As shown in Fig. 5, the flow includes the steps as follows.

S502: A mobile phone is started, and a system goes into a standby state.

S504: T cards are mounted.

After being detected, the external T card and the internal virtual T card are mounted. The external T card is taken as a primary memory. For example, the external T card is mounted as mnt/storage0 in an Android4.2 system, and an attribute value is set as Primary. The internal virtual T card is taken as a secondary memory. For example, the internal virtual T card is mounted as mnt/storage1 in the Android4.2 system, and an attribute value is set as Secondary.

S506: A user starts a third-party application installed on the mobile phone.

S508: The primary memory is detected.

The third-party application invokes the standard interface ISExternStorageExist of the Android system, and judges whether the primary memory exists.

In the embodiment, due to the fact that the external T card exists and is set as the primary memory, TRUE will be returned to inform the user of successful mounting of the primary memory, and the primary memory can be used. Meanwhile, the system returns a storage path mnt/storage of the external T card to the third-party application.

S510: The third-party application performs data storage and reading.

The third-party application performs data storage and reading based on the path mnt/storage.

S512: The user quits the third-party application.

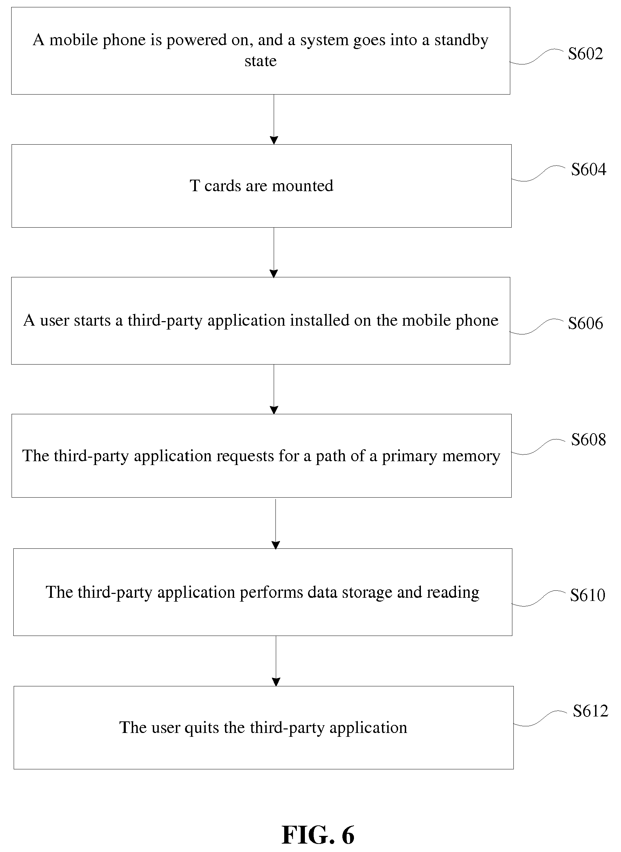

Fig. 6 is a flowchart of a dynamic path linking method in case of no insertion of an external T card according to a preferred embodiment of the present disclosure. As shown in Fig. 6, the flow includes the steps as follows.

S602: A mobile phone is powered on, and a system goes into a standby state.

S604: T cards are mounted.

After being detected, the internal virtual T card and the external T card are mounted. At this time, due to no insertion of the external T card, only the internal virtual T card is mounted as a secondary memory. For example, the internal virtual T card is mounted as mnt/storage1 in an Android4.2 system, and an attribute value is set as Secondary.

S606: A user starts a third-party application installed on the mobile phone.

S608: The third-party application requests for a path of a primary memory.

The third-party application invokes a standard interface ISExternStorageExist of the Android system, and judges whether a primary memory exists.

In the embodiment, after receiving an invoking request of a third party, the system will return TRUE to inform the third-party application of successful mounting of the primary memory, the primary memory can be used, and the storage path mnt/storage1 of the internal virtual T card is returned to the third-party application.

S610: The third-party application performs data storage and reading.

The third-party application performs data storage and reading based on the path mnt/storage1.

S612: The user quits the third-party application.

In the embodiment, when the user uses the mobile phone under a scenario that the external T card is not inserted, the third-party application invokes the standard interface ISExternStorageExist of the Android system, and judges whether the primary memory exists; and at this time, the system still returns TRUE, and dynamically setting the storage path mnt/storage1 of the internal virtual T card as the the path of the primary memory, logically maps the path of the secondary memory to the path of the primary memory, and allows the third-party application to access the secondary memory, thereby achieving the aim that the third-party application may be still used under a scenario that the primary memory is removed.

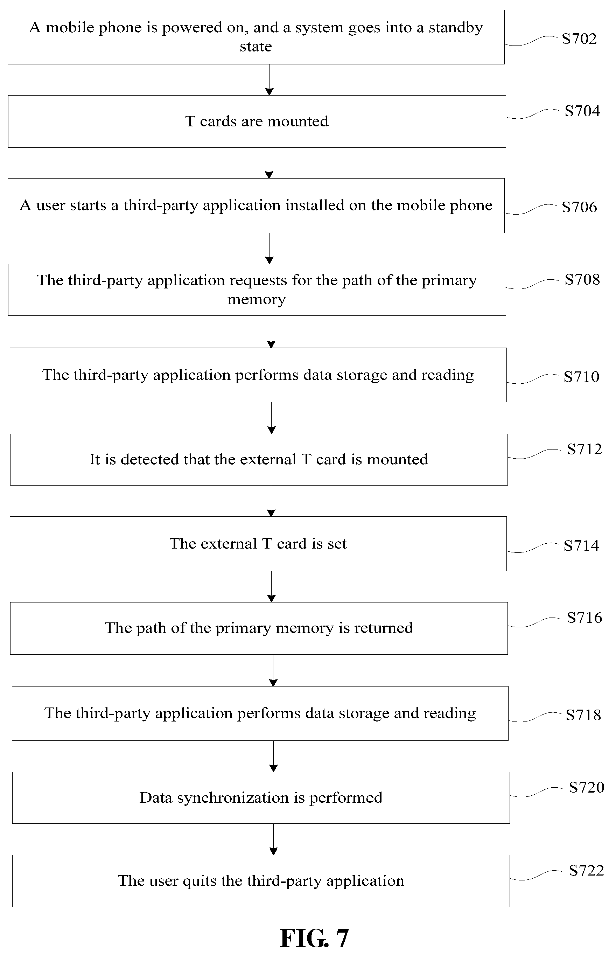

Fig. 7 is a flowchart of a dynamic path linking method in case of re-insertion of an external T card according to a preferred embodiment of the present disclosure. As shown in Fig. 7, the method includes the steps as follows.

S702: A mobile phone is powered on, and a system goes into a standby state.

S704: T cards are mounted.

After being detected, the internal virtual T card and the external T card are mounted. At this time, due to no insertion of the external T card, only the internal virtual T card is taken as a secondary memory. For example, the internal virtual T card is mounted as mnt/storage1 in an Android4.2 system, and an attribute value is set as Secondary.

S706: A user starts a third-party application installed on the mobile phone.

S708: The third-party application requests for the path of the primary memory.

The third-party application invokes a standard interface ISExternStorageExist of the Android system, and judges whether a primary memory exists.

In the embodiment, TRUE will be returned to inform the user of successful mounting of the primary memory, the primary memory may be used, and the storage path mnt/storage1 of the internal virtual T card is returned to the third-party application.

S710: The third-party application performs data storage and reading.

The third-party application performs data storage and reading based on the path mnt/storage1.

S712: It is detected that the external T card is mounted.

S714: The external T card is set.

When the system detects that the external T card is mounted, the external T card is mounted as the primary memory. For example, the external T card is mounted as mnt/storage0 in the Android4.2 system, and an attribute value is set as Primary. A mounting mode of the internal virtual T card is unchanged.

S716: The path of the primary memory is returned.

The system returns the storage path mnt/storage of the external T card to the third-party application.

S718: The third-party application performs data storage and reading.

The third-party application performs data storage and reading based on the path mnt/storage.

S720: Data synchronization is performed.

The system performs user data synchronization on the internal virtual T card backstage. Due to the fact that all mobile phones adopting the solution may be mobile phones with relatively small internal virtual T card spaces, a one-way synchronization mode is used during data synchronization, the user data are only synchronized from the internal virtual T card to the external T card, and it is ensured that the third-party application used before and after the user inserts the external T card is consistent in performance.

In a process of performing data synchronization by the internal and external T cards, if it is detected that the user starts the third-party application, the system pops up a user prompt that data synchronization is being performed on the background; and if the third-party application is started at this time, part of applications may be loaded abnormally.

S722: The user quits the third-party application.

In the embodiment of the present disclosure, after the user has used the mobile phone in a state that the external T card is not inserted, the external T card is re-inserted, and at this time, the mobile phone detects that the primary memory has been mounted; when the third-party application invokes the standard interface ISExternStorageExist of the Android system and judges whether the primary memory exists, TRUE is returned normally, and the storage path mnt/storage of the external T card is dynamically taken as the path of the primary memory; and at this time, data synchronization is performed automatically backstage, the user data stored in the internal virtual T card are synchronized to a same-name folder of the external T card, and it is ensured that existing data in the process used by the user may still maintain a state that the external T card is not inserted. In the embodiment, by redesigning and realizing a path management mode of double-T card storage spaces of the mobile phone, separation of logical control and physical storage is formed for the internal file management of the mobile phone, and files physically stored on different media are transparent to the third-party application in a dynamic file linking mode, so that when using the third-party application, the user can feel that the primary memory exists all the time, and the error problems in the relevant art solution that the third-party application prompts that the T card is not inserted and cannot be used accordingly can be avoided.

From the above descriptions, it can be seen that the present disclosure achieves the following technical effects that: the bottleneck problem that part of third-party applications cannot be used when the external T card is not inserted or the external T card is removed intermittently in a double-T card solution of taking the external T card as a primary storage space used on current middle- and low-end low-storage space mobile phones can be effectively solved. In view of current market surveys, the problem has become a focus problem of poor user experience of the middle- and low-end low-storage space mobile phones. The proposing and realizing of the method can effectively improve the user experience of a target user group, and are of great significance for improving the sales volume and brand preference of the middle- and low-end mobile phones.

Obviously, those skilled in the art should understand that all components or all steps in the present disclosure can be realized by using a generic computation device, can be centralized on a single computation device or can be distributed on a network composed of a plurality of computation devices. Optionally, they can be realized by using executable program codes of the computation devices, so that they can be stored in a memory device and executed by the computation devices, the shown or described steps can be executed in a sequence different from this sequence under certain conditions, or they are manufactured into each integrated circuit component respectively, or a plurality of components or steps therein are manufactured into a single integrated circuit component. Thus, the present disclosure is not limited to combination of any specific hardware and software.

The above is only the preferred embodiments of the present disclosure, and is not intended to limit the present disclosure. There can be various modifications and variations in the present disclosure for those skilled in the art. Any modifications, equivalent replacements, improvements and the like within the spirit and principle of the present disclosure shall fall within the protection scope of the present disclosure.

### Industrial Applicability

As mentioned above, the dynamic path linking method and device and the mobile terminal provided by the embodiments of the present disclosure have the following beneficial effects that: the bottleneck problem that part of the third-party applications cannot be used when the external T card is not inserted or the external T card is removed intermittently in the double-T card solution of taking the external T card as the primary storage space used on the current middle- and low-end low-storage space mobile phones can be effectively solved. In view of the current market surveys, the problem has become the focus problem of poor user experience of the middle- and low-end low-storage space mobile phones. The proposing and realizing of the method can effectively improve the user experience of the target user group, and are of great significance for improving the sales volume and brand preference of the middle- and low-end mobile phones.

## Claims

1. A dynamic path linking method, comprising:
responding to a request for invoking a path of a primary memory, and detecting whether an external storage card exists; and
dynamically setting the path of the primary memory to be a storage path of the external storage card or a storage path of an internal storage card according to a detection result.

2. The method according to claim 1, wherein before the request for invoking the path of the primary memory is responded, the method further comprises: mounting the external storage card as a primary memory, and taking the internal storage card as a secondary memory.

3. The method according to claim 2, wherein dynamically setting the path of the primary memory to be the storage path of the external storage card or the storage path of the internal storage card according to the detection result comprises at least one of the followings:
dynamically setting the path of the primary memory to be the storage path of the internal storage card under the condition that it is detected that the external storage card exists; and
dynamically setting the path of the primary memory to be the storage path of the external storage card under the condition that it is detected that the external storage card does not exist.

4. The method according to claim 3, wherein after the path of the primary memory is dynamically set to be the storage path of the internal storage card, the method further comprises:
synchronizing user data stored in the internal storage card to the external storage card when it is detected that the external storage card is inserted.

5. The method according to any one of claims 1 to 4, wherein responding to the request for invoking the path of the primary memory comprises responding to the request, from a third-party application, for invoking the path of the primary memory.

6. A dynamic path linking device, comprising:
a detection component configured to respond to a request for invoking a path of a primary memory and detect whether an external storage card exists; and
a linking component configured to dynamically set the path of the primary memory to be a storage path of the external storage card or a storage path of an internal storage card according to a detection result.

7. The device according to claim 6, further comprising a setting component configured to mount the external storage card as a primary memory, and mount the internal storage card as a secondary memory.

8. The device according to claim 7, wherein the linking component is further configured to execute at least one of the followings:
dynamically setting the path of the primary memory to be the storage path of the internal storage card under the condition that it is detected that the external storage card does not exist.; and
dynamically setting the th of the primary memory to be the storage path of the external storage card under the condition that it is detected that the external storage card exists..

9. The device according to claim 8, further comprising a synchronization component configured to synchronize user data stored in the internal storage card to the external storage card when it is detected that the external storage card is inserted.

10. The device according to any one of claims 6 to 9, wherein the detection component is further configured to respond, from a third-party application, to the request for invoking the path of the primary memory.

11. A mobile terminal, comprising the device according to any one of claims 6 to 10.
